# EUROPEAN PATENT APPLICATION

(11) **EP 1 607 957 A2**
(43) Date of publication of application: **21.12.2005**
(21) Application number: 05104285.1
(22) Date of filing: 19.05.2005
(51) Int. Cl.: G11B 15/61

(54) **A tape deck**

(30) Priority: 17.06.2004 KR 2004044806
(71) Applicant: SAMSUNG ELECTRONICS CO., LTD., Suwon-si, Gyeonggi-do 442-742 (KR)
(72) Inventor: Sim, Jae-hoon 102-1008, Dongsuwon LG Village, Suwon-si Gyeonggi-do (KR); Kim, Jun-young 108-1904, Dongsuwon LG Village 1st, Suwon-si Gyeonggi-do (KR); Severinets,Georgiy 812-303,Byeokjeokgol Sinhan Apt, Suwon-si Gyeonggi-do (KR); Kim, Jeong-seon, 114-2101,Dongsuwon LG Village 1st, Suwon-si Gyeonggi-do (KR); Choi, Hyeong-seok, 250-1404, Hwanggol-maeul, Suwon-si Gyeonggi-do (KR)
(74) Representative: Geary, Stuart Lloyd

(57) **Abstract**

A head-drum assembly for a magnetic recording/reproducing apparatus, and a method of manufacturing a head/drum assembly, with a simplified setup structure of a fixed drum on a main chassis are provided, where a shaft is inserted into a fixed drum and has a connection unit at least a portion of which protrudes from the lower part of the fixed drum, a rotary drum is disposed on the upper part of the fixed drum and supported by the shaft to be rotatable, a drum base has an opening which the portion of the connection unit penetrates, and a connection housing is connected with the portion of the connection unit on, for example, opposite surface of the drum base.

## Description

The present invention relates to a tape deck comprising a chassis and a head drum mounted thereon.

Typically, a magnetic recording/reproducing apparatus records video and audio data onto a recording medium such as a magnetic tape and reproduces the recorded data. Examples of magnetic recording/reproducing apparatuses include video cassette tape recorders (VCRs) and camcorders.

The magnetic recording/reproducing apparatus comprises a main chassis, a sliding sub-chassis formed in the main chassis, a head-drum assembly for recording/reproducing data on the magnetic tape, and a tape guide for guiding the feeding of the magnetic tape through the apparatus.

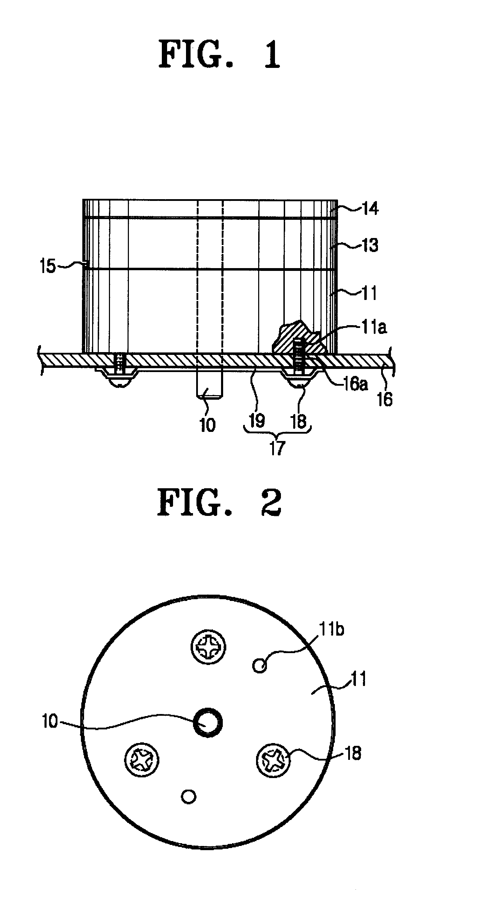

The head-drum assembly rotates and is inclined at a predetermined angle to the main chassis in order to improve performance of the recording/reproducing facility. As shown in Figures 1 and 2, the head-drum assembly comprises a fixed drum 11, a shaft 10 inserted into the fixed drum 11, a rotary drum 13 formed on the shaft 10 to rotate the upper part of the fixed drum 11, a drum cover 14 fixed on the upper part of the rotary drum 13, and a magnetic head 15 mounted to the rotary drum 13.

The magnetic head 15 records data onto the magnetic tape that contacts with the external surfaces of the fixed drum 11 and the rotary drum 13, or reproduces data from the tape.

As illustrated in Figures 1 and 2, the fixed drum 11 comprises three screw openings 11a and two guide grooves 11b. As described above, the known fixed drum 11 is secured to the main chassis 16 by using screws 18. More specifically, the screw openings 16a of the main chassis 16 and the screw openings 11a of the fixed drum 11 are aligned and screwed together. An elastic material 19 is located between the screws 18 and the main chassis 16 to protect the head-drum assembly from being deformed by the connection force of the screws 18. The two guide grooves 11b of the fixed drum 11 accommodate guide protrusions of the main chassis 16 (not shown).

However, since the known fixed drum 11 is secured to the main chassis 16 using arrangement 17, which includes the three screws 18 and the elastic material 19, there are problems in that the productivity is low and the production cost is high because a lot of component parts and manufacturing processes are required.

Accordingly, there is a need for improved arrangement of head-drum assembly utilizing fewer component parts and manufacturing processes.

It is, therefore, an object of the present invention to provide a head-drum assembly for a magnetic recording/reproducing apparatus with a simplified assembly structure in a main chassis, and a method of manufacturing thereof.

The present invention relates to a tape deck comprising a chassis and a head drum mounted thereon.

A tape deck according to the present invention is characterised in that the head drum comprises a centrally located threaded member which extends through a hole in the chassis and is fastened to the chassis by nut means, and complementary lug and socket means provided on the head drum and chassis preventing rotational movement of the head drum relative to the chassis.

Other additional and/or preferred features are set forth in claims 2 and 3 appended hereto.

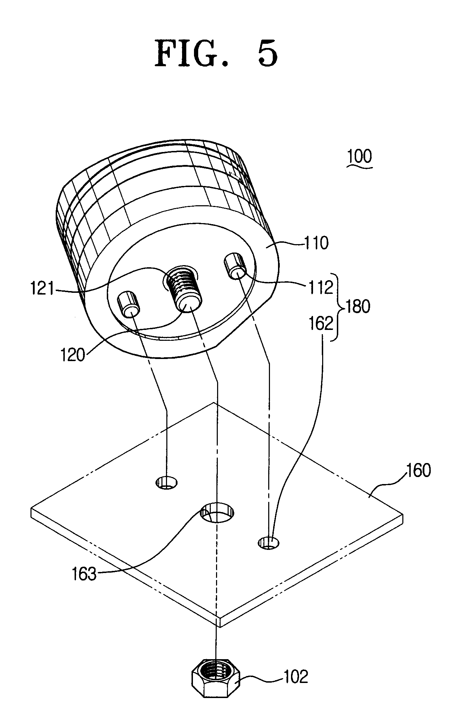

An embodiment of the present invention will now be described, by way of example only, and with reference to Figure 3, 4 and 5 of the accompanying drawings, in which:
Figure 1 and 2 show a known head-drum assembly for a magnetic recording/reproducing apparatus and an assembly structure thereof;
Figure 3 is a side view illustrating a head-drum assembly for a magnetic recording/reproducing apparatus and an assembly structure thereof in accordance with an embodiment of the present invention;
Figure 4 is an exploded perspective view of Figure 3; and
Figure 5 is an exploded perspective view depicting the head-drum assembly for a magnetic recording/reproducing apparatus and an assembly structure thereof in accordance with another embodiment of the present invention.

Throughout the drawing figures, like reference numbers will be understood to refer to like elements, features and structures.

In the following description, the matters defined in the description such as a detailed construction and elements are exemplary implementations provided to assist in a comprehensive understanding of exemplary embodiments of the invention. Thus, it is apparent that various implementations of the embodiments of the present invention can be carried out without strict adherence to those defined matters. Also, description of well-known functions or constructions are omitted for conciseness and clarity.

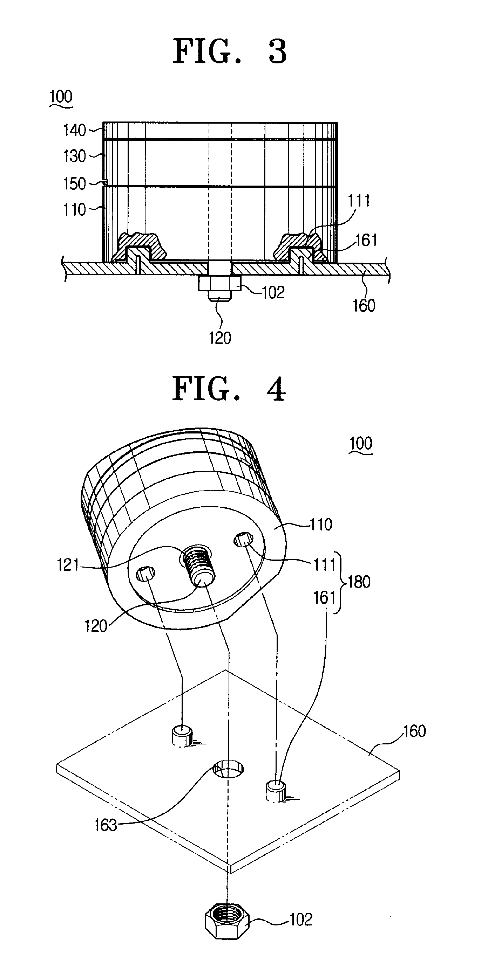

Referring to Figure 3, a head-drum assembly 100 is mounted so as to rotate and be inclined at a predetermined angle relative to a main chassis (not shown) where various parts of the magnetic recording/reproducing apparatus are mounted, so that the recording/reproducing performance can be improved.

The head-drum assembly 100 comprises a fixed drum 110, a shaft 120, a rotary drum 130, a drum base 160 and a nut 102 (sometimes referred to as a connection housing).

The fixed drum 110 is fixed to the drum base 160 by the shaft 120, and the rotary drum 130 and a drum cover 140 are located in the upper part of the fixed drum 110.

The shaft 120 is forcibly fitted into the fixed drum 110 and a threaded shaft 121 (sometimes called a connection part), which penetrates the drum base 160, is formed in the protrusion of the lower part of the fixed drum 110.

The rotary drum 130 is located on the upper part of the fixed drum 110 and is rotated with the help of a bearing (not shown) located on the shaft 120. The drum cover 140 which is connected to the shaft 120 is located in the upper part of the rotary drum 130, and a magnetic head 150 is set up to record data onto a magnetic tape or to reproduce recorded data stored on the tape.

It is preferable that the drum base 160 is formed by bending a part of the main chassis. This reduces the number of parts required. However, the present invention is not limited to this, and it is possible to make the drum base 160 as, for example, a separate member which is secured to the main chassis. The fixed drum 110 is located on the drum base 160, and the threaded shaft 121 protrudes through an opening 163.

The nut 102 is connected with the threaded shaft 121 which penetrates the drum base 160 from the other side, through the opening 163.

Therefore, since the threaded shaft 121 is connected with the threaded nut from the other side of the drum base 160 to secure the fixed drum 110 on the drum base 160, the number of parts for setting up the fixed drum 110 is reduced and the time for setup is also reduced. Also, the head-drum assembly 100 for a magnetic recording/reproducing apparatus comprises a guide 180 for guiding the fixed drum 110 to its setup position.

As illustrated in Figures 3 and 4, in a first embodiment of the present invention, the guide 180 comprises a pair of guide bosses 161 formed in the drum base 160 and boss housings 111 formed in the fixed drum 110 at positions corresponding to the guide bosses 161. The guide bosses 161 are integrally formed with the drum base 160 through a drawing process, which is illustrated in Figure 3. However, the guide bosses 161 may be formed separately and secured to the drum base 160.

In accordance with a second embodiment of the present invention, the guide 180 comprises at least a pair of guide bosses 112 formed in the fixed drum 110 and boss housings 162 formed in the drum base 160 at positions corresponding to the guide bosses 161.

In accordance with the first and second embodiments, the guide bosses 161 and 112 and the boss housings 111 and 162 are symmetrically formed with each other with the shaft 120 at the centre to easily guide the fixed drum 110 to its setup position.

The guide 180 prevents the fixed drum 110 from being rotated from the initial setup position because of the high-speed rotation of the rotary drum 130 and helps the fixed drum 110 to remain in the predetermined position.

Although the first and second embodiments of the present invention show that the threaded shaft 121 and the nut 102 are used to secure the fixed drum 110, other implementations for securing the fixed drum 110 are within the scope if the invention. For example, it is possible to replace the nut 102 with a pin and the threaded shaft 121 with a pin opening. Thus, the pin 121 secures the fixed drum 110 to the drum base 160 by insertion into the pin opening through the opening 163 formed in the drum base 160.

As described above, the head-drum assembly for a magnetic recording/reproducing apparatus sets up the fixed drum on the drum base by forming a connection unit at one end of the shaft which is inserted to the fixed drum with pressure, penetrating the connection unit through the drum base, and connecting the connection unit with the connection housing from the other surface of the drum base. Therefore, the number of parts and manufacturing processes required for setting up the fixed drum can be reduced, thereby saving the production cost as well.

## Claims

1. A tape deck comprising a chassis (160) and a head drum (110) mounted thereon, **characterised in that** the head drum (110) comprises a centrally located threaded member (120) which extends through a hole (163) in the chassis (160) and is fastened to the chassis (160) by nut means (102), and complementary lug and socket means (180) provided on the head drum (110) and chassis (160) preventing rotational movement of the head drum (110) relative to the chassis (160).

2. A tape deck according to claim 1, wherein the head drum (110) comprises the lug means.

3. A tape deck according to claim 1, wherein the head drum (110) comprises the socket means.

4. A head-drum assembly for a magnetic recording/reproducing apparatus, comprising:
a fixed drum;
a shaft inserted into the fixed drum , the shaft comprising a connection unit protruding from a lower part of the fixed drum;
a rotary drum disposed with respect to an upper part of the fixed drum and rotatably supported by the shaft;
a drum base comprising an opening, an upper surface facing the lower part of the fixed drum, and a lower surface;; and
a connection housing engaging at least a portion of the connection unit;
wherein the portion of the connection unit penetrates the opening of the drum base and extends beyond the lower surface of the drum base.

5. The head-drum assembly as recited in claim 4, wherein the connection unit comprises a threaded bolt, and the connection housing comprises a threaded nut.

6. The head-drum assembly as recited in claim 5, further comprising a guide for guiding the fixed drum to a setup position.

7. The head-drum assembly as recited in claim 6, wherein the guide comprises:
at least two guide bosses disposed on the upper surface of the drum base; and
at least two boss housings disposed on the lower part of the fixed drum at positions corresponding to positions of the guide bosses.

8. The head-drum assembly as recited in claim 6, wherein the guide comprises:
at least two guide bosses disposed on the lower part of the fixed drum; and
at least two boss housings disposed on the upper surface of the drum base at positions corresponding to positions of the guide bosses.

9. The head-drum assembly as recited in claim 7, wherein the positions of the guide bosses are symmetrical with respect to the shaft.

10. The head-drum assembly as recited in claim 7, wherein the guide bosses are integrally formed with the drum base.

11. A magnetic recording/reproducing apparatus comprising:
the head-drum assembly as recited in claim 4; and
a main chassis;
wherein the drum base is integrally formed with the main chassis, and the main chassis comprises components of the magnetic recording/reproducing apparatus mounted thereon.

12. A method of manufacturing a head-drum assembly for a magnetic recording/reproducing apparatus, the method comprising:
inserting a shaft into a fixed drum, the shaft comprising a connection unit at least a portion of the connecting unit protruding from a lower part of the fixed drum;
disposing a rotary drum on the shaft with respect to an upper part of the fixed drum, wherein the rotary drum is rotatably supported by the shaft;
placing the portion of the connecting unit protruding from the lower part of the fixed drum into an opening of a drum base, whereby an upper surface of the drum base faces the lower part of the fixed drum; and
connecting a connection housing to engage at least a portion of the connection unit protruding from a lower surface of the drum base.

13. The method of manufacturing the head-drum assembly as recited in claim 12, wherein the connection unit comprises a threaded bolt, the connection housing comprises a threaded nut, and the connecting of the connection housing comprises engaging a portion of the threaded bolt protruding from the lower surface of the drum base with the threaded nut.

14. The method of manufacturing the head-drum assembly as recited in claim 12, further comprising forming a guide for guiding the fixed drum to a setup position.

15. The method of manufacturing the head-drum assembly as recited in claim 14, wherein the forming of the guide comprises:
disposing at least two guide bosses on the upper surface of the drum base; and
disposing at least two boss housings on the lower part of the fixed drum at positions corresponding to positions of the guide bosses.

16. The method of manufacturing the head-drum assembly as recited in claim 15, wherein the positions of the guide bosses are symmetrical with respect to the shaft.

17. The method of manufacturing the head-drum assembly as recited in claim 15, wherein forming of the guide bosses comprises forming the guide bosses integrally with the drum base through a drawing process.
